(19) Europäisches Patentamt
European Patent Office
Office européen des brevets

(11) EP 3 036 297 B1

(12) EUROPÄISCHE PATENTSCHRIFT

(45) Veröffentlichungstag und Bekanntmachung des Hinweises auf die Patenterteilung:
**19.04.2017 Patentblatt 2017/16**

(21) Anmeldenummer: **14758091.4**

(22) Anmeldetag: **21.08.2014**

(51) Int Cl.:
***C09D 183/04*** *(2006.01)*

(86) Internationale Anmeldenummer:
**PCT/EP2014/002292**

(87) Internationale Veröffentlichungsnummer:
**WO 2015/024660 (26.02.2015 Gazette 2015/08)**

# (54) SILIKONGEL MIT VERRINGERTER SCHADGASEMISSION

GAS-EMISSION-REDUCED SILICONE GEL

GEL DE SILICONE À ÉMISSION RÉDUITE DE GAZ POLLUANTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.08.2013 DE 102013013984**

(43) Veröffentlichungstag der Anmeldung:
**29.06.2016 Patentblatt 2016/26**

(73) Patentinhaber: **Elantas GmbH**
**46483 Wesel (DE)**

(72) Erfinder: **STEINMANN, Andreas**
**21079 Hamburg (DE)**

(74) Vertreter: **Schuck, Alexander**
**Isenbruck Bösl Hörschler LLP**
**Patentanwälte**
**Seckenheimer Landstraße 4**
**68163 Mannheim (DE)**

(56) Entgegenhaltungen:
**DE-A1- 2 906 214 US-A1- 2004 203 268**

- **DATABASE WPI Week 200426 Thomson Scientific, London, GB; AN 2004-272420 XP002731730, -& JP 2003 055553 A (SHINETSU CHEM IND CO LTD) 26. Februar 2003 (2003-02-26)**
- **XIAOBO CHEN ET AL: "Titanium Dioxide Nanomaterials: Synthesis, Properties, Modifications, and Applications", CHEMICAL REVIEWS, Bd. 107, Nr. 7, 23. Juni 2007 (2007-06-23) , Seiten 2891-2959, XP055002733, DOI: 10.1021/cr0500535**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 036 297 B1

## Beschreibung

Die Erfindung betrifft Zusammensetzungen, enthaltend Polyorganosiloxane, einen Hydrosilylierungskatalysator, einen Inhibitor oder Moderator und dotiertes pyrogenes Titandioxid, deren Verwendung zum Aufbringen von Schutzbeschichtungen auf ein elektrisches oder elektronisches Bauteil oder Gerät sowie die Schutzbeschichtungen als solche.
Seit langem existieren Silikongele, die alkenylgruppenhaltige Polyorganosiloxane, z.B. vinylgruppenterminierte Polydimethylsiloxane, und Polyorganohydrogensiloxane enthalten, welche unter Verwendung eines Hydrosilylierungskatalysators vernetzt werden.
Diese Silikongele unterliegen jedoch bei Temperaturen oberhalb von 150 °C einem oxidativen Abbau, der im Falle von methylgruppenhaltigen Siloxanpolymeren zur Emission von Gas führt, das Kohlenstoffmonooxid und Formaldehyd enthält.
Die US 5,571,853 beschreibt ein Silikongel zum Schutz von elektrischen und elektronischen Komponenten mit kleinem Elastizitätsmodul und dennoch guter Flexibilität. Das hier beschriebene Silikongel enthält ein vinylgruppenterminiertes Polydimethylsiloxan, ein nicht funktionalisiertes Dimethylsiloxan, ein Organohydrogenpolysiloxan und einen Hydrosilylierungskatalysator.
Die US 7,829,648 beschreibt ein weiches Silikongel mit kleinem Elastizitätsmodul, das nicht ausblutet. Es enthält ein alkenylgruppenhaltigen Polysiloxan, ein Organohydrogenpolysiloxan und einen Platin-Katalysator.
JP 2003 055553 A offenbart eine flüssige Silikonkautschuk-Zusammensetzung.
Bisher sind keine Silikongele mit verringerter Gasemission durch Unterdrückung des oxidativen Abbaus bei hoher Temperatur bekannt.
Aufgabe der Erfindung ist es daher, eine Silikongelformulierung bereitzustellen, die für den Einsatz bei Temperaturen deutlich oberhalb von 150 °C geeignet ist, ohne dabei schädliche gasförmige Zersetzungsprodukte freizusetzen.
Gelöst wird die Aufgabe durch eine Zusammensetzung, enthaltend

a) 30 bis 99,799989 Gew.-% mindestens eines linearen oder verzweigten Polyorganosiloxans, enthaltend mindestens zwei Alkenyl- oder Alkinyl-Gruppen, als Komponente A;

b) 0,1 bis 30 Gew.-% mindestens eines linearen oder verzweigten Polyorganosiloxans, enthaltend mindestens 3 Si-H-Gruppen, als Komponente B;

c) 0,000001 bis 1 Gew.-% mindestens eines Hydrosilylierungskatalysators als Komponente C;

d) 0,00001 bis 5 Gew.-% mindestens eines Inhibitors oder Moderators, ausgewählt aus den Gruppen D1 und D2, als Komponente D:

D1: organische Verbindungen mit mindestens einer Alkinyl-Gruppe und mindestens einer Hydroxyl-Gruppe;

D2: acyclische oder cyclische Organosiloxane mit 1 bis 5 Si-Atomen, enthaltend mindestens zwei Alkenyl-Gruppen;

e) 0,2 bis 5 Gew.-% mindestens eines eisendotierten pyrogenen Titandioxids als Komponente E, wobei der Eisenanteil des eisendotierten pyrogenen Titandioxids 0,1 bis 10 Gew.-% beträgt,

f) 0 bis 69,799989 Gew.-% eines oder mehrerer linearer oder verzweigter Polyorganosiloxane, enthaltend zwei endständige Si-H-Gruppen oder eine endständige Si-H-Gruppe und eine endständige Alkenyl-Gruppe, als Komponente F;

g) 0 bis 69,799989 Gew.-% eines oder mehrerer weiterer linearer oder verzweigter Polyorganosiloxane als Komponente G;

h) 0 bis 10 Gew.-% eines oder mehrerer Additive als Komponente H;

wobei die Summe der Komponenten A bis H 100 Gew.-% ergibt.
Überraschenderweise wurde gefunden, dass der Zusatz von eisendotiertem pyrogenem Titandioxid zu einer Organosiloxanformulierung, welche sich zu einem Gel oder einer Beschichtung aushärten lässt, den oxidativen Abbau des Organopolysiloxans unterdrückt und dadurch die Abgabe von gasförmigen Zersetzungsprodukten reduziert.
Dabei wurde überaschenderweise auch gefunden, dass die Freisetzung von gasförmigen Zersetzungsprodukten zunimmt, je größer der Anteil von Komponente E ist, obwohl diese die Freisetzung der gasförmigen Zersetzungsprodukte unterdrückt. Es ist daher von Vorteil, den Anteil von Komponente E gering zu halten. Verwendet man hingegen anstelle von Komponente E ein undotiertes pyrogenes Titandioxid, so ist die abbauhemmende Wirkung umso größer, je mehr man davon dem Polyorganosiloxan zugibt.

Die Unterdrückung des oxidativen Abbaus der Polyorganosiloxanmischung und damit der Freisetzung von gasförmigen Abbauprodukten wurde durch Messung der zunehmenden Verhärtung der Silikongeloberfläche während einer Lagerung bei einer Temperatur deutlich oberhalb von 150 °C festgestellt. Dies ist möglich, da nach dem oxidativen Abbau der Polyorganosiloxanmischung anorganisches Siliziumdioxid entsteht, welches eine höhere Härte als die Polyorganosiloxanmischung aufweist.

Die Figuren zeigen:

Figur 1 zeigt ein Diagramm, in dem der Massenverlust von Beispiel 1 und Vergleichsbeispiel 1 während der Lagerung bei 206 °C gegen die Lagerzeit aufgetragen ist.
Figur 2 zeigt ein Diagramm, in dem die Eindringtiefe von Beispiel 1 und Vergleichsbeispiel 2 während der Lagerung bei 206 °C gegen die Lagerzeit aufgetragen ist.
Figur 3 zeigt ein Diagramm, in dem die Eindringtiefe der Beispiele 1 bis 3 während der Lagerung bei 206 °C gegen die Lagerzeit aufgetragen ist.

In einer besonders bevorzugten Ausführungsform enthält die erfindungsgemäße Zusammensetzung

a) 80 bis 99,5899 Gew.-% der Komponente A;
b) 0,2 bis 10 Gew.-% der Komponente B;
c) 0,0001 bis 0,5 Gew.-% der Komponente C;
d) 0,01 bis 2 Gew.-% der Komponente D;
e) 0,2 bis 5 Gew.-% der Komponente E;
f) 0 bis 19,5899 Gew.-% der Komponente F;
g) 0 bis 19,5899 Gew.-% der Komponente G;
h) 0 bis 10 Gew.-% der Komponente H;

wobei die Summe der Komponenten A bis H 100 Gew.-% ergibt.

In einer bevorzugten Ausführungsform enthält die erfindungsgemäße Zusammensetzung 34 bis 99,799989 Gew.-% der Komponente A, 0 bis 65,799989 Gew.-% der Komponente F und 0 bis 65,799989 Gew.-% der Komponente G.

In einer besonders bevorzugten Ausführungsform enthält die erfindungsgemäße Zusammensetzung 34 bis 99,799989 Gew.-% der Komponente A, 0 Gew.-% der Komponente F, 0 Gew.-% der Komponente G und 0 Gew.-% der Komponente H.

In einer besonders bevorzugten Ausführungsform besteht die erfindungsgemäße Zusammensetzung aus den Komponenten A, B, C, D und E, wobei die Summe der Komponenten A bis E 100 Gew.-% ergibt.

In einer ganz besonders bevorzugten Ausführungsform enthält die erfindungsgemäße Zusammensetzung

a) 82,5 bis 99,5899 Gew.-% der Komponente A;
b) 0,2 bis 10 Gew.-% der Komponente B;
c) 0,0001 bis 0,5 Gew.-% der Komponente C;
d) 0,01 bis 2 Gew.-% der Komponente D;
e) 0,2 bis 5 Gew.-% der Komponente E;
f) 0 bis 17,0899 Gew.-% der Komponente F, insbesondere 0 Gew.-% der Komponente F;
g) 0 bis 17,0899 Gew.-% der Komponente G, insbesondere 0 Gew.-% der Komponente G;
h) 0 bis 10 Gew.-% der Komponente H, insbesondere 0 Gew.-% der Komponente H;

wobei die Summe der Komponenten A bis H 100 Gew.-% ergibt.

In einer speziellen Ausführungsform enthält die erfindungsgemäße Zusammensetzung

a) 85,5 bis 99,4899 Gew.-% der Komponente A;
b) 0,2 bis 10 Gew.-% der Komponente B;
c) 0,0001 bis 0,5 Gew.-% der Komponente C;
d) 0,01 bis 2 Gew.-% der Komponente D;
e) 0,3 bis 2 Gew.-% der Komponente E;
f) 0 bis 13,9899 Gew.-% der Komponente F, insbesondere 0 Gew.-% der Komponente F;
g) 0 bis 13,9899 Gew.-% der Komponente G, insbesondere 0 Gew.-% der Komponente G;

h) 0 bis 10 Gew.-% der Komponente H, insbesondere 0 Gew.-% der Komponente H;

wobei die Summe der Komponenten A bis H 100 Gew.-% ergibt.

In einer weiteren speziellen Ausführungsform enthält die erfindungsgemäße Zusammensetzung

a) 92,5 bis 99,4899 Gew.-% der Komponente A;
b) 0,2 bis 3 Gew.-% der Komponente B;
c) 0,0001 bis 0,5 Gew.-% der Komponente C;
d) 0,01 bis 2 Gew.-% der Komponente D;
e) 0,3 bis 2 Gew.-% der Komponente E;
f) 0 bis 6,9899 Gew.-% der Komponente F, insbesondere 0 Gew.-% der Komponente F;
g) 0 bis 6,9899 Gew.-% der Komponente G, insbesondere 0 Gew.-% der Komponente G;
h) 0 bis 10 Gew.-% der Komponente H, insbesondere 0 Gew.-% der Komponente H;

wobei die Summe der Komponenten A bis H 100 Gew.-% ergibt.

Als Komponente A enthält die erfindungsgemäße Zusammensetzung mindestens ein lineares oder verzweigtes Polyorganosiloxan, enthaltend mindestens zwei Alkenyl-oder Alkinyl-Gruppen.

Vorzugsweise enthält die erfindungsgemäße Zusammensetzung als Komponente A mindestens ein lineares Polyorganosiloxan, enthaltend mindestens zwei Alkenyl-Gruppen. Die Alkenyl-Gruppen sind bevorzugt Vinyl-Gruppen, besonders bevorzugt endständige Vinyl-Gruppen.

In einer bevorzugten Ausführungsform enthält die erfindungsgemäße Zusammensetzung als Komponente A mindestens ein lineares Polyorganosiloxan der allgemeinen Formel (IV),

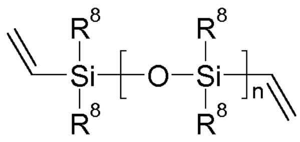

(IV)

wobei

$R^8$ unabhängig ausgewählt ist aus $C_1$-$C_6$-Alkyl; und
n eine Zahl von 6 bis 1000 ist.

In einer besonders bevorzugten Ausführungsform enthält die erfindungsgemäße Zusammensetzung als Komponente A mindestens ein lineares Polyorganosiloxan der allgemeinen Formel (IV), wobei $R^8$ Methyl ist und n eine Zahl von 6 bis 1000 ist.

Mit dem Ausdruck "$C_1$-$C_6$-Alkyl" ist im Rahmen der vorliegenden Erfindung die nachstehende Gruppe von Alkyl-Gruppen gemeint: Methyl, Ethyl, n-Propyl, isoPropyl, n-Butyl, iso-Butyl, sek-Butyl, tert-Butyl, n-Pentyl, 3-Metylbutyl, 2-Methylbutyl, 1-Methylbutyl, 1-Ethylpropyl, n-Hexyl, 4-Methylpentyl, 3-Methylpentyl, 2-Methylpentyl, 1-Methylpentyl, 2-Ethylbutyl, 1-Ethylbutyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1,1,2-Trimethylpropyl, 1,2,2-Tri-methylpropyl, 1-Ethyl-1-methylpropyl, 1-Ethyl-2-methylpropyl.

Die Viskosität des Polyorganosiloxans gemäß Komponente A beträgt im Allgemeinen zwischen 1 und 500000 mPa·s, bevorzugt zwischen 100 und 100000 mPa·s, besonders bevorzugt zwischen 100 und 10000 mPa·s.

Die erfindungsgemäße Zusammensetzung enthält 30 bis 99,799989 Gew.-%, bevorzugt 50 bis 99,69899 Gew.-%, besonders bevorzugt 80 bis 99,5899 Gew.-% der Komponente A.

In einer speziellen Ausführungsform enthält die erfindungsgemäße Zusammensetzung bevorzugt 34 bis 99,799989 Gew.-%, besonders bevorzugt 71 bis 99,69899 Gew.-%, ganz besonders bevorzugt 82,5 bis 99,5899 Gew.-% der Komponente A.

Als Komponente B enthält die erfindungsgemäße Zusammensetzung mindestens ein lineares oder verzweigtes Polyorganosiloxan, enthaltend mindestens 3 Si-H-Gruppen.

Bevorzugt enthält die erfindungsgemäße Zusammensetzung als Komponente B mindestens ein lineares Polyorganosiloxan, enthaltend mindestens 3 Si-H-Gruppen.

Besonders bevorzugt enthält die erfindungsgemäße Zusammensetzung als Komponente B mindestens ein lineares Polydimethylsiloxan, enthaltend mindestens 3 Si-H-Gruppen.

Der Si-H-Anteil des Polyorganosiloxans gemäß Komponente B beträgt im Allgemeinen zwischen 0,5 und 20

mmol/g, bevorzugt zwischen 1 und 10 mmol/g, besonders bevorzugt zwischen 1 und 8 mmol/g, insbesondere zwischen 4 und 8 mmol/g.

Ganz besonders bevorzugt enthält die erfindungsgemäße Zusammensetzung als Komponente B mindestens ein lineares Polydimethylsiloxan, enthaltend mindestens 3 Si-H-Gruppen, wobei der Si-H-Anteil des Polydimethylsiloxans zwischen 4 und 8 mmol/g beträgt.

Die Viskosität des Polyorganosiloxans gemäß Komponente B beträgt im Allgemeinen zwischen 1 und 10000 mPa·s, bevorzugt zwischen 1 und 1000 mPa·s, besonders bevorzugt zwischen 5 und 100 mPa·s.

Die erfindungsgemäße Zusammensetzung enthält 0,1 bis 30 Gew.-%, bevorzugt 0,2 bis 15 Gew.-%, besonders bevorzugt 0,2 bis 10 Gew.-% der Komponente B.

Als Komponente C enthält die erfindungsgemäße Zusammensetzung mindestens einen Hydrosilylierungskatalysator.

Vorzugsweise enthält die erfindungsgemäße Zusammensetzung als Komponente C einen Hydrosilylierungskatalysator auf der Basis eines Platingruppenmetalls. Unter dem Begriff "Platingruppenmetalle" sind im Rahmen der vorliegenden Erfindung die Metalle Ruthenium, Rhodium, Palladium, Osmium, Iridium und Platin zu verstehen. Bevorzugt sind Hydrosilylierungskatalysatoren auf der Basis von Platin. Weiterhin bevorzugte Hydrosilylierungskatalysatoren sind Platin-Alkenylsiloxan-Komplexe. Insbesondere bevorzugt ist der Hydrosilylierungskatalysator ausgewählt aus der Gruppe bestehend aus dem Platin-1,3-Divinyl-1,1,3,3-tetramethyldisiloxan-Komplex (Karstedt-Komplex), dem Platin-1,3-Diallyl-1,1,3,3-tetramethyldisiloxan-Komplex, dem Platin-1,3-Divinyl-1,3-dimethyl-1,3-diphenyldisiloxan-Komplex, dem Platin-1,1,3,3-tetraphenyldisiloxan-Komplex und dem Platin-1,3,5,7-Tetramethyl-1,3,5,7-tetravinylcyclotetrasiloxan-Komplex. Der Hydrosilylierungskatalysator ist ganz besonders bevorzugt der Platin-1,3-Divinyl-1,1,3,3-tetramethyldisiloxan-Komplex (Karstedt-Komplex).

Die erfindungsgemäße Zusammensetzung enthält 0,000001 bis 1 Gew.-%, bevorzugt 0,00001 bis 1 Gew.-%, besonders bevorzugt 0,0001 bis 0,5 Gew.-% der Komponente C.

Als Komponente D enthält die erfindungsgemäße Zusammensetzung mindestens einen Inhibitor oder Moderator, ausgewählt aus den Gruppen D1 und D2:

D1: organische Verbindungen mit mindestens einer Alkinyl-Gruppe und mindestens einer Hydroxyl-Gruppe;

D2: acyclische oder cyclische Organosiloxane mit 1 bis 5 Si-Atomen, enthaltend mindestens zwei Alkenyl-Gruppen.

Die Verbindungen aus der Gruppe D1 weisen bevorzugt 3 bis 18 C-Atome, besonders bevorzugt 4 bis 16 C-Atome, ganz besonders bevorzugt 4 bis 12 C-Atome auf.

Bevorzugt besteht die Gruppe D1 aus organischen Verbindungen mit genau einer Alkinyl-Gruppe und genau einer Hydroxyl-Gruppe.

Besonders bevorzugt besteht die Gruppe D1 aus organischen Verbindungen mit genau einer endständigen Alkinyl-Gruppe und genau einer Hydroxyl-Gruppe.

In einer weiteren besonderen Ausführungsform besteht die Gruppe D1 aus Alkinolen der allgemeinen Formel (I),

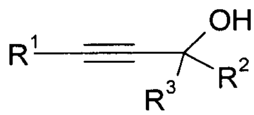

(I)

wobei

$R^1$, $R^2$, $R^3$ unabhängig voneinander ausgewählt sind aus H, $C_1$-$C_6$-Alkyl und substituiertem oder unsubstituiertem $C_3$-$C_6$-Cycloalkyl; oder

$R^1$ ausgewählt ist aus H, $C_1$-$C_6$-Alkyl und substituiertem oder unsubstituiertem $C_3$-$C_6$-Cycloalkyl, und $R^2$, $R^3$ miteinander verbunden sind und einen 3- bis 8-gliedrigen Ring bilden, welcher mit einer oder mehreren $C_1$-$C_3$-Alkyl-Gruppen substituiert sein kann.

Mit dem Ausdruck "$C_3$-$C_6$-Cycloalkyl" ist im Rahmen der vorliegenden Erfindung die nachstehende Gruppe von Cycloalkyl-Gruppen gemeint: Cyclopropyl, Cyclobutyl, Cyclopentyl, Cyclohexyl.

In einer Ausführungsform ist $C_3$-$C_6$-Cycloalkyl unsubstituiert oder mit einer oder mehreren $C_1$-$C_3$-Alkyl-Gruppen substituiert.

Bevorzugt besteht die Gruppe D1 aus Alkinolen der allgemeinen Formel (I), wobei $R^1$, $R^2$, $R^3$ unabhängig

voneinander ausgewählt sind aus H, $C_1$-$C_6$-Alkyl und substituiertem oder unsubstituiertem $C_3$-$C_6$-Cycloalkyl.

Besonders bevorzugt besteht die Gruppe D1 aus Alkinolen der allgemeinen Formel (I), wobei $R^1$ H ist, $R^2$ Methyl ist und $R^3$ ausgewählt ist aus $C_1$-$C_6$-Alkyl.

Ganz besonders bevorzugt besteht die Gruppe D1 aus den Alkinolen 2-Methyl-3-butin-2-ol und 3,5-Dimethyl-1-hexin-3-ol, insbesondere aus dem Alkinol 3,5-Dimethyl-1-hexin-3-ol.

Bevorzugt besteht die Gruppe D2 aus acyclischen oder cyclischen Organosiloxane mit 2 bis 4 Si-Atomen, enthaltend mindestens zwei Alkenyl-Gruppen.

Besonders bevorzugt besteht die Gruppe D2 aus den Organosiloxanen Tetramethyldivinylsiloxan, Trimethyltrivinylcyclotrisiloxan und Tetramethyltetravinylcyclotetrasiloxan.

Ganz besonders bevorzugt besteht die Gruppe D2 aus den Organosiloxanen Tetramethyldivinylsiloxan und Tetramethyltetravinylcyclotetrasiloxan, insbesondere aus dem Organosiloxan Tetramethyldivinylsiloxan.

Die Verbindungen Tetramethyldivinylsiloxan, Trimethyltrivinylcyclotrisiloxan und Tetramethyltetravinylcyclotetrasiloxan sind nachfolgend abgebildet:

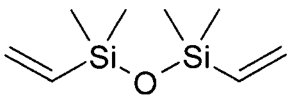

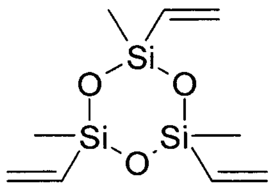

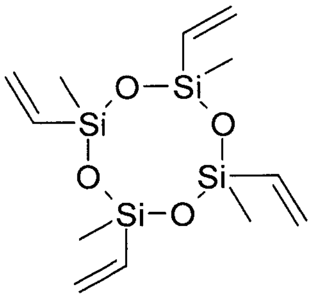

In einer Ausführungsform enthält die erfindungsgemäße Zusammensetzung als Komponente D genau einen Inhibitor oder Moderator, ausgewählt aus den Gruppen D1 und D2.

In einer Ausführungsform enthält die erfindungsgemäße Zusammensetzung als Komponente D keinen Inhibitor oder Moderator aus der Gruppe D2.

In einer weiteren Ausführungsform enthält die erfindungsgemäße Zusammensetzung als Komponente D genau einen Inhibitor oder Moderator, und dieser eine Inhibitor oder Moderator ist ausgewählt aus der Gruppe D1.

In einer Ausführungsform enthält die erfindungsgemäße Zusammensetzung als Komponente D keinen Inhibitor oder Moderator aus der Gruppe D1.

In einer weiteren Ausführungsform enthält die erfindungsgemäße Zusammensetzung als Komponente D genau einen Inhibitor oder Moderator, und dieser eine Inhibitor oder Moderator ist ausgewählt aus der Gruppe D2.

In einer bevorzugten Ausführungsform enthält die erfindungsgemäße Zusammensetzung als Komponente D mindestens zwei Inhibitoren oder Moderatoren, ausgewählt aus den Gruppen D1 und D2.

In einer weiteren bevorzugten Ausführungsform enthält die erfindungsgemäße Zusammensetzung als Komponente D genau zwei Inhibitoren oder Moderatoren, ausgewählt aus den Gruppen D1 und D2.

In einer besonders bevorzugten Ausführungsform enthält die erfindungsgemäße Zusammensetzung als Komponente D mindestens einen Inhibitor oder Moderator, ausgewählt aus der Gruppe D1, und mindestens einen Inhibitor oder Moderator, ausgewählt aus der Gruppe D2.

Bevorzugt liegt das Verhältnis der Summe der Gewichtsteile des mindestens einen Inhibitors oder Moderators, ausgewählt aus der Gruppe D1, zu der Summe der Gewichtsteile des mindestens einen Inhibitors oder Moderators, ausgewählt aus der Gruppe D2, im Bereich von 1:1 bis 1:50, besonders bevorzugt im Bereich von 1:5 bis 1:20, ganz besonders bevorzugt im Bereich von 1:10 bis 1:15.

In einer weiteren besonders bevorzugten Ausführungsform enthält die erfindungsgemäße Zusammensetzung als Komponente D genau einen Inhibitor oder Moderator, ausgewählt aus der Gruppe D1, und genau einen Inhibitor oder Moderator, ausgewählt aus der Gruppe D2.

Bevorzugt liegt das Gewichtsverhältnis des Inhibitors oder Moderators, ausgewählt aus der Gruppe D1, zu dem Inhibitor oder Moderator, ausgewählt aus der Gruppe D2, im Bereich von 1:1 bis 1:50, besonders bevorzugt im Bereich von 1:5 bis 1:20, ganz besonders bevorzugt im Bereich von 1:10 bis 1:15.

Die erfindungsgemäße Zusammensetzung enthält 0,00001 bis 5 Gew.-%, bevorzugt 0,001 bis 3 Gew.-%, besonders bevorzugt 0,01 bis 2 Gew.-% der Komponente D.

Durch die Konzentration der Komponente D lässt sich die Katalysatoraktivität steuern.

Als Komponente E enthält die erfindungsgemäße Zusammensetzung mindestens ein dotiertes pyrogenes Titandioxid.

Der Begriff "pyrogenes Titandioxid" ist dem Fachmann bekannt. Pyrogenes Titandioxid kann z.B. durch Flammenhydrolyse von Titantetrachlorid hergestellt werden. Ein Beispiel für ein kommerziell erhältliches pyrogenes Titandioxid ist AEROXIDE® $TiO_2$ P 25 der Firma Evonik.

Der Begriff "dotiertes pyrogenes Titandioxid" ist dem Fachmann bekannt. Dotiertes pyrogenes Titandioxid kann z.B. durch Flammenhydrolyse von Titantetrachlorid und einem weiteren Chlorid (entsprechend der Dotierung) hergestellt werden. Beispielsweise kann zur Herstellung von eisendotiertem pyrogenem Titandioxid Eisentrichlorid als weiteres Chlorid eingesetzt werden. Ein Beispiel für ein kommerziell erhältliches eisendotiertes pyrogenes Titandioxid ist AEROXIDE® $TiO_2$ PF 2 der Firma Evonik.

In einer bevorzugten Ausführungsform enthält die erfindungsgemäße Zusammensetzung als Komponente E mindestens ein dotiertes pyrogenes Titandioxid, ausgewählt aus der Gruppe bestehend aus eisendotiertem pyrogenem Titandioxid, aluminiumdotiertem pyrogenem Titandioxid, cerdotiertem pyrogenem Titandioxid und zirkoniumdotiertem pyrogenem Titandioxid.

Die erfindungsgemäße Zusammensetzung enthält als Komponente E mindestens ein eisendotiertes pyrogenes Titandioxid.

Eisendotiertes pyrogenes Titandioxid kann z.B. durch Flammenhydrolyse von Titantetrachlorid und Eisentrichlorid hergestellt werden.

Das Gewichtsverhältnis von Eisen zu Titan in dem eisendotierten pyrogenen Titandioxid liegt bevorzugt im Bereich von 0,0001 bis 0,1, besonders bevorzugt im Bereich von 0,001 bis 0,1, ganz besonders bevorzugt im Bereich von 0,01 bis 0,05.

Der Eisenanteil des eisendotierten pyrogenen Titandioxids beträgt 0,1 bis 10 Gew.-%, ganz besonders bevorzugt 1 bis 5 Gew.-%, insbesondere bevorzugt 1 bis 2 Gew.-%.

In einer weiteren bevorzugten Ausführungsform beträgt der Eisenoxidanteil des eisendotierten pyrogenen Titandioxids 0,01 bis 10 Gew.-%, besonders bevorzugt 0,1 bis 10 Gew.-%, ganz besonders bevorzugt 1 bis 5 Gew.-%, insbesondere bevorzugt 1 bis 3 Gew.-%.

Die spezifische Oberfläche (bestimmt nach BET) des dotierten, vorzugsweise eisendotierten, pyrogenen Titandioxids gemäß Komponente E beträgt im Allgemeinen zwischen 30 und 400 $m^2/g$, bevorzugt zwischen 30 und 200 $m^2/g$, besonders bevorzugt zwischen 35 und 100 $m^2/g$, ganz besonders bevorzugt zwischen 35 und 80 $m^2/g$.

Im Allgemeinen beträgt die mittlere Teilchengröße des dotierten, vorzugsweise eisendotierten, pyrogenen Titandioxids gemäß Komponente E zwischen 10 und 300 nm, bevorzugt zwischen 10 und 200 nm, besonders bevorzugt zwischen 10 und 100 nm, ganz besonders bevorzugt zwischen 10 und 50 nm.

Die Stampfdichte (bestimmt nach DIN EN ISO 787/11) des dotierten, vorzugsweise eisendotierten, pyrogenen Titandioxids gemäß Komponente E beträgt im Allgemeinen zwischen 10 und 500 g/l, bevorzugt zwischen 30 und 200 g/l, besonders bevorzugt zwischen 50 und 150 g/l, ganz besonders bevorzugt zwischen 80 und 120 g/l.

Die erfindungsgemäße Zusammensetzung enthält 0,2 bis 5 Gew.-% der Komponente E.

In einer speziellen Ausführungsform enthält die erfindungsgemäße Zusammensetzung 0,3 bis 2 Gew.-% der Komponente E.

Gegebenenfalls enthält die erfindungsgemäße Zusammensetzung ein oder mehrere lineare oder verzweigte Polyorganosiloxane, enthaltend zwei endständige Si-H-Gruppen oder eine endständige Si-H-Gruppe und eine endständige Alkenyl-Gruppe, als Komponente F.

Vorzugsweise handelt es sich bei der Komponente F um ein oder mehrere lineare Polyorganosiloxane, enthaltend zwei endständige Si-H-Gruppen oder eine endständige Si-H-Gruppe und eine endständige Alkenyl-Gruppe.

In einer bevorzugten Ausführungsform handelt es sich bei der Komponente F um ein oder mehrere Polyorganosiloxane der allgemeinen Formel (II),

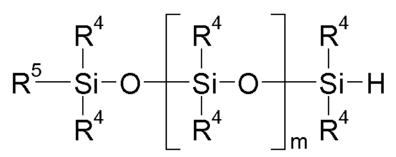

(II)

wobei

- $R^4$ unabhängig ausgewählt ist aus $C_1$-$C_6$-Alkyl,
- $R^5$ ausgewählt ist aus H und $C_2$-$C_6$-Alkenyl, und
- m eine Zahl von 1 bis 400 ist.

$R^4$ ist vorzugsweise Methyl.
$R^5$ ist vorzugsweise H oder Vinyl.
m ist vorzugsweise eine Zahl von 2 bis 400.

In einer besonders bevorzugten Ausführungsform handelt es sich bei der Komponente F um ein oder mehrere Polyorganosiloxane der allgemeinen Formel (II), wobei $R^4$ Methyl ist, $R^5$ H oder Vinyl ist und m eine Zahl von 2 bis 400 ist.

Mit dem Ausdruck "$C_2$-$C_6$-Alkenyl" ist im Rahmen der vorliegenden Erfindung die nachstehende Gruppe von Alkenyl-Gruppen gemeint: Vinyl, Allyl, Methallyl, 1-Methylallyl, Homoallyl, *cis*-But-2-enyl, *trans*-But-2-enyl, *cis*-Pent-1-enyl, *trans*-Pent-1-enyl, *cis*-Pent-2-enyl, *trans*-Pent-2-enyl, *cis*-Pent-3-enyl, *trans*-Pent-3-enyl, *cis*-1-Methylbut-1-enyl, *trans*-1-Methylbut-1-enyl, *cis*-2-Methylbut-1-enyl, *trans*-2-Methylbut-1-enyl, *cis*-3-Methylbut-1-enyl, *trans*-3-Methylbut-1-enyl, *cis*-1-Methyl-but-2-enyl, *trans*-1-Methylbut-2-enyl, *cis*-2-Methylbut-2-enyl, trans-2-Methylbut-2-enyl, 3-Methylbut-2-enyl, 1-Methyl-but-3-enyl, 2-Methylbut-3-enyl, 3-Methylbut-3-enyl, *cis*-1-Ethylprop-1-enyl, *trans*-1-Ethylprop-1-enyl, 1-Ethyl-prop-2-enyl, cis-Hex-1-enyl, *trans*-Hex-1-enyl, *cis*-Hex-2-enyl, *trans*-Hex-2-enyl, *cis*-Hex-3-enyl, *trans*-Hex-3-enyl, *cis*-Hex-4-enyl, *trans*-Hex-4-enyl, Hex-5-enyl, *cis*-1-Methylpent-1-enyl, *trans*-1-Methylpent-1-enyl, *cis*-2-Methylpent-1-enyl, *trans*-2-Methylpent-1enyl, *cis*-3-Methylpent-1-enyl, *trans*-3-Methylpent-1-enyl, *cis*-4-Methylpent-1-enyl, *trans*-4-Methylpent-1-enyl, *cis*-1-Methylpent-2-enyl, *trans*-1-Methyl-pent-2-enyl, *cis*-2-Methylpent-2-enyl, *trans*-2-Methylpent-2enyl, *cis*-3-Methylpent-2-enyl, *trans*-3-Methylpent-2-enyl, *cis*-4-Methylpent-2-enyl, *trans*-4-Methylpent-2-enyl, *cis*-1-Methylpent-3-enyl, *trans*-1-Methylpent-3-enyl, *cis*-2-Methylpent-3-enyl, *trans*-2-Methyl-pent-3-enyl, *cis*-3-Methylpent-3-enyl, *trans*-3-Methylpent-3-enyl, 4-Methylpent-3-enyl, 1-Methylpent-4-enyl, 2-Methylpent-4-enyl, 3-Methylpent-4-enyl, 4-Methylpent-4-enyl, *cis*-1,2-Dimethylbut-1-enyl, *trans*-1,2-Dimethylbut-1-enyl, cis-1,3-Dimethylbut-1-enyl, *trans*-1,3-Dimethylbut-l-enyl, *cis*-3,3-Dimethylbut-1-enyl, *trans*-3,3-Dimethylbut-1-enyl, *cis*-1,1-Dimethylbut-2-enyl, *trans-1,1-Dimethylbut-2*-enyl, *cis*-1,2-Dimethylbut-2-enyl, *trans*-1,2-Dimethylbut-2-enyl, *cis*-1,3-Dimethylbut-2-enyl, *trans*-1,3-Dimethylbut-2-enyl, *cis*-2,3-Dimethylbut-2-enyl, *trans*-2,3-Dimethylbut-2-enyl, 1,1-Dimethylbut-3-enyl, 1,2-Dimethylbut-3-enyl, 1,3-Dimethylbut-3-enyl, 2,2-Dimethylbut-3-enyl, 2,3-Dimethylbut-3-enyl.

Die Viskosität des Polyorganosiloxans gemäß Komponente F beträgt im Allgemeinen zwischen 1 und 10000 mPa•s, bevorzugt zwischen 10 und 1000 mPa·s, besonders bevorzugt zwischen 10 und 50 mPa•s.

Die erfindungsgemäße Zusammensetzung enthält 0 bis 69,799989 Gew.-%, bevorzugt 0 bis 49,69899 Gew.-%, besonders bevorzugt 0 bis 19,5899 Gew.-% der Komponente F.

In einer speziellen Ausführungsform enthält die erfindungsgemäße Zusammensetzung bevorzugt 0 bis 65,799989 Gew.-%, besonders bevorzugt 0 bis 28,69899 Gew.-%, ganz besonders bevorzugt 0 bis 17,0899 Gew.-% der Komponente F.

In einer Ausführungsform enthält die erfindungsgemäße Zusammensetzung 0 Gew.-% der Komponente F.

Gegebenenfalls enthält die erfindungsgemäße Zusammensetzung ein oder mehrere weitere lineare oder verzweigte Polyorganosiloxane als Komponente G.

Bevorzugt handelt es sich bei der Komponente G um ein oder mehrere lineare Polyorganosiloxane.

Besonders bevorzugt handelt es sich bei der Komponente G um ein oder mehrere lineare Polydimethylsiloxane.

In einer bevorzugten Ausführungsform handelt es sich bei der Komponente G um ein oder mehrere Polyorganosiloxane der allgemeinen Formel (III),

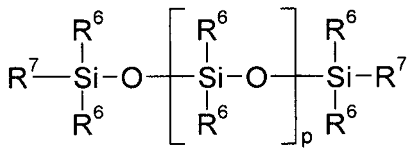

(III)

wobei

- $R^6$ unabhängig ausgewählt ist aus $C_1$-$C_6$-Alkyl;
- $R^7$ unabhängig ausgewählt ist aus $C_1$-$C_6$-Alkyl; und
- p eine Zahl von 1 bis 2000 ist.

$R^6$ ist vorzugsweise Methyl.
$R^7$ ist vorzugsweise Methyl.
p ist vorzugsweise eine Zahl von 10 bis 1000, insbesondere eine Zahl von 10 bis 900.

In einer besonders bevorzugten Ausführungsform handelt es sich bei der Komponente G um ein oder mehrere Polyorganosiloxane der allgemeinen Formel (II), wobei $R^6$ Methyl ist, $R^7$ Methyl ist und p eine Zahl von 10 bis 900 ist.

Die Viskosität des Polyorganosiloxans gemäß Komponente G beträgt im Allgemeinen zwischen 1 und 100000 mPa•s, bevorzugt zwischen 10 und 10000 mPa•s.

Die erfindungsgemäße Zusammensetzung enthält 0 bis 69,799989 Gew.-%, bevorzugt 0 bis 49,69899 Gew.-%, besonders bevorzugt 0 bis 19,5899 Gew.-% der Komponente G.

In einer speziellen Ausführungsform enthält die erfindungsgemäße Zusammensetzung bevorzugt 0 bis 65,799989 Gew.-%, besonders bevorzugt 0 bis 28,69899 Gew.-%, ganz besonders bevorzugt 0 bis 17,0899 Gew.-% der Komponente G.

In einer Ausführungsform enthält die erfindungsgemäße Zusammensetzung 0 Gew.-% der Komponente G.

Gegebenenfalls enthält die erfindungsgemäße Zusammensetzung ein oder mehrere Additive als Komponente H.

Bei den Additiven gemäß Komponente H handelt es sich insbesondere um herkömmliche Additive.

Vorzugsweise handelt es sich bei der Komponente H um ein oder mehrere Additive ausgewählt aus der Gruppe bestehend aus Pigmenten, Farbstoffen, Haftvermittlern, Flammschutzmitteln, UV-Stabilisatoren und UV-Fluoreszenzmarkern.

Die erfindungsgemäße Zusammensetzung enthält 0 bis 10 Gew.-%, bevorzugt 0 bis 10 Gew.-%, besonders bevorzugt 0 bis 10 Gew.-% der Komponente H.

In einer Ausführungsform enthält die erfindungsgemäße Zusammensetzung 0 Gew.-% der Komponente H.

In der erfindungsgemäßen Zusammensetzung liegt das Molverhältnis von Si-H-Gruppen zu Si-Alkenyl-Gruppen bevorzugt im Bereich von 0,3 bis 5, besonders bevorzugt im Bereich von 0,3 bis 2, ganz besonders bevorzugt im Bereich von 0,3 bis 1,5.

Die Scherviskosität der erfindungsgemäßen Zusammensetzung beträgt im Allgemeinen bei einer Schergeschwindigkeit von 10 $s^{-1}$ höchstens 100000 mPa•s. Vorzugsweise beträgt die Scherviskosität der erfindungsgemäßen Zusammensetzung bei einer Schergeschwindigkeit von 10$s^{-1}$ höchstens 10000 mPa•s.

Im Rahmen der vorliegenden Erfindung ist unter dem Begriff "Viskosität" immer die dynamische Viskosität ($\eta$) zu verstehen, die die Einheit $N \cdot s \cdot m^{-2}$ = Pa•s bzw. $mN \cdot s \cdot m^{-2}$ = mPa•s hat.

Der Begriff "Scherviskosität" ist gleichbedeutend mit dem Begriff "Viskosität". Der Begriff "Scherviskosität" wird insbesondere dann anstelle des Begriffs "Viskosität" verwendet, wenn die angegebene Viskosität sich auf eine bestimmte Schergeschwindigkeit bezieht. Dies soll dann lediglich verdeutlichen, dass sich die Viskosität in Abhängigkeit von der Schergeschwindigkeit ändert.

Die Viskosität kann durch eine Vielzahl dem Fachmann bekannter Methoden bestimmt werden. Bspw. lässt sich die dynamische Viskosität mit Hilfe eines Kapillarviskosimeters, eines Fallkörperviskosimeters oder eines Rotations-Rheometers bestimmen. Eine umfassende Darstellung zur Bestimmung der Viskosität findet sich in Meichsner, G. / Mezger, T. G. / Schröder, J. (1997) Lackeigenschaften messen und steuern. In Zorll, U. (Hrsg.), Rheometrie (S. 50-81). Hannover: Vincenz. Sofern nicht ausdrücklich etwas anderes angegeben ist, wurden die in der vorliegenden Anmeldung genannten Viskositäten an einem Oszillations-/Rotations-Rheometer (Typ: MCR-302 der Firma Anton Paar) bestimmt.

Alle in dieser Anmeldung aufgeführten Viskositäten beziehen sich auf Raumtemperatur (23 °C), sofern nicht ausdrücklich etwas anderes angegeben ist.

Um die Lagerstabilität der erfindungsgemäßen Zusammensetzung weiter zu verbessern, können die Komponenten A bis E und ggf. F bis H auf zwei Teilmischungen aufgeteilt werden, wobei die Komponente C in eine andere Teilmischung gegeben wird als die Komponente B und ggf. die Komponente F. Die beiden Teilmischungen können beispielsweise kurz vor Ihrer Verwendung miteinander vermischt werden.

Gegenstand der Erfindung ist auch ein Verfahren zum Aufbringen einer Schutzbeschichtung auf ein elektrisches oder elektronisches Bauteil oder Gerät, umfassend die Schritte:

a) Bereitstellen einer erfindungsgemäßen Zusammensetzung;

b) Aufbringen der Zusammensetzung auf ein elektrisches oder elektronisches Bauteil oder Gerät; und

c) Härten der aufgebrachten Zusammensetzung, wodurch die Schutzbeschichtung ausgebildet wird.

Das Aufbringen gemäß Schritt b) erfolgt im Allgemeinen durch herkömmliche, dem Fachmann bekannte Methoden. Beispiele für solche Methoden sind Vergießen und Vakuumvergießen.

Das Härten gemäß Schritt c) kann bei Raumtemperatur erfolgen. Vorzugsweise erfolgt das Härten gemäß Schritt c) durch Erhitzen.

Wird durch Erhitzen gehärtet, so erfolgt dies im Allgemeinen durch herkömmliche, dem Fachmann bekannte Methoden. Beispielsweise können ein Ofen oder elektromagnetische Strahlung eingesetzt werden.

Bevorzugt wird die aufgebrachte Zusammensetzung bei einer Temperatur zwischen Raumtemperatur und 250 °C, besonders bevorzugt zwischen Raumtemperatur und 150 °C gehärtet.

Die Schichtdicke der durch das erfindungsgemäße Verfahren aufgebrachten Schutzbeschichtung beträgt im Allgemeinen zwischen 0,01 und 30 cm, vorzugsweise zwischen 0,1 und 30 cm.

Das erfindungsgemäße Verfahren eignet sich insbesondere zum Aufbringen einer Schutzbeschichtung auf elektrische oder elektronische Bauteile oder Geräte, die einer Dauertemperaturbelastung von ≥ 150 °C ausgesetzt sind.

Insbesondere eignet sich das erfindungsgemäße Verfahren auch zum Aufbringen einer Schutzbeschichtung auf IGBT's (Insulated Gate Bipolar Transistors), Steuerungsmodule, Leiterplatinen und Halbleiter, insbesondere im Bereich der Kraftfahrzeug- und Leistungselektronik. Das erfindungsgemäße Verfahren kann auch für Hochspannungsanwendungen verwendet werden.

Ein weiterer Gegenstand der Erfindung ist die Verwendung einer erfindungsgemäßen Zusammensetzung zum Aufbringen einer Schutzbeschichtung auf ein elektrisches oder elektronisches Bauteil oder Gerät.

Gegenstand der Erfindung ist auch eine Schutzbeschichtung auf einem elektrischen oder elektronischen Bauteil oder Gerät, erhältlich durch das erfindungsgemäße Verfahren.

Ein weiterer Gegenstand der Erfindung ist ein elektrisches oder elektronisches Bauteil oder Gerät mit einer darauf aufgebrachten, erfindungsgemäßen bzw. durch das erfindungsgemäße Verfahren erhältlichen Schutzbeschichtung.

Die Erfindung wird durch die nachstehenden Beispiele näher erläutert.

**Beispiele**

Alle unten aufgeführten Mischungen wurden in eine Aluminiumschale gegeben und 72 Stunden auf 120 °C erhitzt, so dass eine vollständige Vernetzung stattfand. Danach wurde die Schale bei 206 °C in einem Umluftofen gelagert. Dabei wurde die Gasemission über die Lagerungsdauer verfolgt. Dazu wurden die Penetrationshärte und/oder der Massenverlust fortlaufend bestimmt.

Die Messung der Penetrationshärte erfolgte nach DIN EN ISO 2137 und wurde mit einem Petrotest-Gerät des Typs PNR10 durchgeführt. Der Eindringkörper ist ein Viertelkonus.

Als Komponente A wurde in den Beispielen und Vergleichsbeispielen das Polymer VS 2000 der Firma Hanse Evonik eingesetzt. Hierbei handelt es sich um ein lineares Polydimethylsiloxan, das an beiden Enden eine Vinylgruppe aufweist.

Als Komponente B wurde in den Beispielen und Vergleichsbeispielen der Crosslinker 1595H7 der Firma BRB International B.V. eingesetzt. Hierbei handelt es sich um ein lineares Polydimethylsiloxan mit einem Si-H-Anteil von 7 mmol/g.

Als Komponente E wurde in den Beispielen 1 bis 3 das eisendotierte pyrogene Titandioxid AEROXIDE® $TiO_2$ PF 2 der Firma Evonik eingesetzt.

**Vergleichsbeispiel 1**

Eine Mischung aus 1985,42 Gew.-Teilen eines Divinylpolydimethylsiloxans mit der Viskosität 2000 mPa·s (Komponente A), 13,5 Gew.-Teilen eines Polydimethylsiloxans mit einem Si-H-Anteil von 7 mmol/g (Komponente B), 0,08 Gew.-Teilen 3,5-Dimethyl-1-hexin-3-ol (Komponente D), 1 Gew.-Teil einer 1%igen Lösung des Karstedt-Komplexes (Komponente C) in 1,2-Divinyltetramethyldisiloxan (Komponente D) wurde gründlich vermischt. Anschließend wurde die Mischung 72 Stunden bei 206 °C vernetzt. Es wurde der Massenverlust während der Lagerung bei 206 °C bestimmt.

**Beispiel 1** (Referenz)

Eine Mischung aus 1985,42 Gew.-Teilen eines Divinylpolydimethylsiloxans mit der Viskosität 2000 mPa•s (Komponente A), 13,5 Gew.-Teilen eines Polydimethylsiloxans mit einem Si-H-Anteil von 7 mmol/g (Komponente B), 0,08 Gew.-Teilen 3,5-Dimethyl-1-hexin-3-ol (Komponente D), 1 Gew.-Teil einer 1%igen Lösung des Karstedt-Komplexes (Komponente C) in 1,2-Divinyltetramethyldisiloxan (Komponente D), sowie 10 Gew.-Teilen eines eisendotierten pyrogenen Titandioxids (Komponente E) wurde gründlich vermischt. Anschließend wurde die Mischung 72 Stunden bei 206 °C vernetzt. Es wurden die Penetrationshärte und der Massenverlust während der Lagerung bei 206 °C bestimmt.

In Figur 1 ist der Massenverlust in % (Ordinate) von Beispiel 1 und Vergleichsbeispiel 1 während der Lagerung bei 206 °C gegen die Lagerzeit in Tagen (Abszisse) aufgetragen. Der Massenverlust zum Zeitpunkt x bezieht sich auf die Masse zum Zeitpunkt 0, d.h. auf den Zeitpunkt, an dem die Lagerung bei 206 °C beginnt, und wird folgendermaßen berechnet:

$$\text{Massenverlust in \% (zum Zeitpunkt x)} = \{[\text{Masse (zum Zeitpunkt 0)} - \text{Masse (zum Zeitpunkt x)}] / \text{Masse (zum Zeitpunkt 0)}\} \cdot 100$$

Aus Figur 1 ist ersichtlich, dass der Massenverlust in Beispiel 1 deutlich geringer ist als in Vergleichsbeispiel 1, d.h. dass die Verwendung von eisendotiertem pyrogenem Titandioxid den Massenverlust deutlich verringert.

**Vergleichsbeispiel 2**

Eine Mischung aus 1985,42 Gew.-Teilen eines Divinylpolydimethylsiloxans mit der Viskosität 2000 mPa·s (Komponente A), 13,5 Gew.-Teilen eines Polydimethylsiloxans mit einem Si-H-Anteil von 7 mmol/g (Komponente B), 0,08 Gew.-Teilen 3,5-Dimethyl-1-hexin-3-ol (Komponente D), 1 Gew.-Teil einer 1%igen Lösung des Karstedt-Komplexes (Komponente C) in 1,2-Divinyltetramethyldisiloxan (Komponente D), sowie 10 Gew.-Teilen eines undotierten pyrogenen Titandioxids wurde gründlich vermischt. Anschließend wurde die Mischung 72 Stunden bei 206 °C vernetzt. Es wurde die Penetrationshärte während der Lagerung bei 206 °C bestimmt.

In Figur 2 ist die Eindringtiefe in mm (Ordinate) von Beispiel 1 und Vergleichsbeispiel 2 während der Lagerung bei 206 °C gegen die Lagerzeit in Stunden (Abszisse) aufgetragen.

Aus Figur 2 ist ersichtlich, dass das eisendotierte pyrogene Titandioxid eine Zunahme der Penetrationshärte wirksamer verhindert als das undotierte pyrogene Titandioxid.

**Beispiel 2** (Referenz)

Eine Mischung aus 1985,42 Gew.-Teilen eines Divinylpolydimethylsiloxans mit der Viskosität 2000 mPa•s (Komponente A), 13,5 Gew.-Teilen eines Polydimethylsiloxans mit einem Si-H-Anteil von 7 mmol/g (Komponente B), 0,08 Gew.-Teilen 3,5-Dimethyl-1-hexin-3-ol (Komponente D), 1 Gew.-Teil einer 1%igen Lösung des Karstedt-Komplexes (Komponente C) in 1,2-Divinyltetramethyldisiloxan (Komponente D), sowie 20 Gew.-Teilen eines eisendotierten pyrogenen Titandioxids (Komponente E) wurde gründlich vermischt. Anschließend wurde die Mischung 72 Stunden bei 206 °C vernetzt. Es wurde die Penetrationshärte während der Lagerung bei 206 °C bestimmt.

**Beispiel 3** (Referenz)

Eine Mischung aus 1985,42 Gew.-Teilen eines Divinylpolydimethylsiloxans mit der Viskosität 2000 mPa•s (Komponente A), 13,5 Gew.-Teilen eines Polydimethylsiloxans mit einem Si-H-Anteil von 7 mmol/g (Komponente B), 0,08 Gew.-Teilen 3,5-Dimethyl-1-hexin-3-ol (Komponente D), 1 Gew.-Teil einer 1%igen Lösung des Karstedt-Komplexes (Komponente C) in 1,2-Divinyltetramethyldisiloxan (Komponente D), sowie 30 Gew.-Teilen eines eisendotierten pyrogenen Titandioxids (Komponente E) wurde gründlich vermischt. Anschließend wurde die Mischung 72 Stunden bei 206 °C vernetzt. Es wurde die Penetrationshärte während der Lagerung bei 206 °C bestimmt.

In Figur 3 ist die Eindringtiefe in mm (Ordinate) der Beispiele 1 bis 3 während der Lagerung bei 206 °C gegen die Lagerzeit in Stunden (Abszisse) aufgetragen.

Aus Figur 3 ist ersichtlich, dass es für die Konzentration des eisendotierten pyrogenen Titandioxids eine optimale Konzentration gibt. Wird diese überschritten, findet der oxidative Abbau verstärkt statt und die Härte nimmt zu. Dieses Verhalten ist überraschend und war nicht vorhersehbar.

**Patentansprüche**

**1.** Zusammensetzung, enthaltend

a) 30 bis 99,799989 Gew.-% mindestens eines linearen oder verzweigten Polyorganosiloxans, enthaltend mindestens zwei Alkenyl- oder Alkinyl-Gruppen, als Komponente A;
b) 0,1 bis 30 Gew.-% mindestens eines linearen oder verzweigten Polyorganosiloxans, enthaltend mindestens 3 Si-H-Gruppen, als Komponente B;
c) 0,000001 bis 1 Gew.-% mindestens eines Hydrosüylierungskataiysators als Komponente C;
d) 0,00001 bis 5 Gew.-% mindestens eines Inhibitors oder Moderators, ausgewählt aus den Gruppen D1 und D2, als Komponente D:

D1: organische Verbindungen mit mindestens einer Alkinyl-Gruppe und mindestens einer Hydroxyl-Gruppe;

D2: acyclische oder cyclische Organosiloxane mit 1 bis 5 Si-Atomen, enthaltend mindestens zwei Alkenyl-Gruppen;

e) 0,2 bis 5 Gew.-% mindestens eines eisendotierten pyrogenen Titandioxids als Komponente E, wobei der Eisenanteil des eisendotierten pyrogenen Titandioxids 0,1 bis 10 Gew.-% beträgt,
f) 0 bis 69,799989 Gew.-% eines oder mehrerer linearer oder verzweigter Polyorganosiloxane, enthaltend zwei endständige Si-H-Gruppen oder eine endständige Si-H-Gruppe und eine endständige Alkenyl-Gruppe, als Komponente F;
g) 0 bis 69,799989 Gew.-% eines oder mehrerer weiterer linearer oder verzweigter Polyorganosiloxane als Komponente G;
h) 0 bis 10 Gew.-% eines oder mehrerer Additive als Komponente H; wobei die Summe der Komponenten A bis H 100 Gew.-% ergibt.

2. Zusammensetzung gemäß Anspruch 1, **dadurch gekennzeichnet, dass** die Zusammensetzung 34 bis 99,799989 Gew.-% der Komponente A, 0 bis 65,799989 Gew.-% der Komponente F und 0 bis 65,799989 Gew.-% der Komponente G enthält.

3. Zusammensetzung gemäß Anspruch 1 oder 2, **dadurch gekennzeichnet, dass** die Zusammensetzung 34 bis 99,799989 Gew.-% der Komponente A, 0 Gew.-% der Komponente F, 0 Gew.-% der Komponente G und 0 Gew.-% der Komponente H enthält.

4. Zusammensetzung gemäß Anspruch 2 oder 3, **dadurch gekennzeichnet, dass** die Zusammensetzung aus den Komponenten A, B, C, D und E besteht, wobei die Summe der Komponenten A bis E 100 Gew.-% ergibt.

5. Zusammensetzung gemäß einem der Ansprüche 1 bis 4, **dadurch gekennzeichnet, dass** die Zusammensetzung als Komponente A mindestens ein lineares Polyorganosiloxan der allgemeinen Formel (IV) enthält,

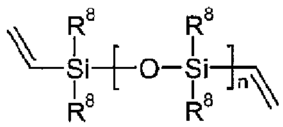

(IV)

wobei

$R^8$ unabhängig ausgewählt ist aus $C_1$-$C_6$-Alkyl; und
n eine Zahl von 6 bis 1000 ist.

6. Zusammensetzung gemäß einem der Ansprüche 1 bis 5, **dadurch gekennzeichnet, dass** die Zusammensetzung als Komponente B mindestens ein lineares Polydimethylsiloxan, enthaltend mindestens 3 Si-H-Gruppen enthält, wobei der Si-H-Anteil des Polydimethylsiloxans zwischen 4 und 8 mmol/g beträgt.

7. Zusammensetzung gemäß einem der Ansprüche 1 bis 6, **dadurch gekennzeichnet, dass** der Hydrosilylierungskatalysator ausgewählt ist aus der Gruppe bestehend aus dem Platin-1,3-Divinyl-1,1,3,3-tetramethyldisiloxan-Komplex (Karstedt-Komplex), dem Platin-1,3-Diallyl-1,1,3,3-tetramethyldisiloxan-Komplex, dem Platin-1,3-Divinyl-1,3-dimethyl-1,3-diphenyldisiloxan-Komplex, dem Platin-1,1,3,3-tetraphenyldisiloxan-Komplex und dem Platin-1,3,5,7-Tetramethy)-1,3,5,7-tetravinylcyclotetrasiloxan-Komplex.

8. Zusammensetzung gemäß einem der Ansprüche 1 bis 7, **dadurch gekennzeichnet, dass** die Gruppe D1 aus Alkinolen der allgemeinen Formel (I) besteht,

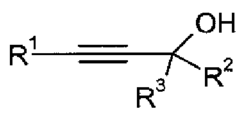

(I)

wobei
$R^1$, $R^2$, $R^3$ unabhängig voneinander ausgewählt sind aus H, $C_1$-$C_6$-Alkyl und substituiertem oder unsubstituiertem $C_3$-$C_6$-Cycloalkyl; oder
$R^1$ ausgewählt ist aus H, $C_1$-$C_6$-Alkyl und substituiertem oder unsubstituiertem $C_3$-$C_6$-Cycloalkyl, und $R^2$, $R^3$ miteinander verbunden sind und einen 3- bis 8-gliedrigen Ring bilden, welcher mit einer oder mehreren $C_1$-$C_3$-Alkyl-Gruppen substituiert sein kann.

9. Zusammensetzung gemäß einem der Ansprüche 1 bis 8, **dadurch gekennzeichnet, dass** die Gruppe D2 aus den Organosiloxanen Tetramethyldivinylsiloxan, Trimethyltrivinylcyclotrisiloxan und Tetramethyltetravinylcyclotetrasiloxan besteht.

10. Zusammensetzung gemäß einem der Ansprüche 1 bis 9, **dadurch gekennzeichnet, dass** die Zusammensetzung als Komponente D mindestens einen Inhibitor oder Moderator, ausgewählt aus der Gruppe D1, und mindestens einen Inhibitor oder Moderator, ausgewählt aus der Gruppe D2, enthält.

11. Zusammensetzung gemäß einem der Ansprüche 1 bis 10, **dadurch gekennzeichnet, dass** der Eisenoxidanteil des eisendotierten pyrogenen Titandioxids 1 bis 3 Gew.-% beträgt.

12. Zusammensetzung gemäß einem der Ansprüche 1, 2 oder 5 bis 11, **dadurch gekennzeichnet, dass** es sich bei der Komponente F um ein oder mehrere Polyorganosiloxane der allgemeinen Formel (II) handelt,

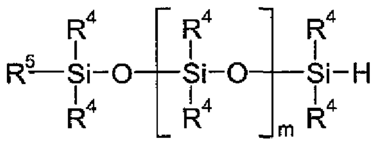

(II)

wobei

$R^4$ unabhängig ausgewählt ist aus $C_1$-$C_6$-Alkyl;
$R^5$ ausgewählt ist aus H und $C_2$-$C_6$-Alkenyl; und
m eine Zahl von 1 bis 400 ist.

13. Zusammensetzung gemäß einem der Ansprüche 1, 2 oder 5 bis 12, **dadurch gekennzeichnet, dass** es sich bei der Komponente G um ein oder mehrere Polyorganosiloxane der allgemeinen Formel (III) handelt,

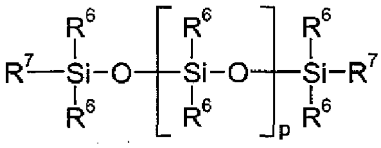

(III)

wobei

$R^6$ unabhängig ausgewählt ist aus $C_1$-$C_6$-Alkyl;
$R^7$ unabhängig ausgewählt ist aus $C_1$-$C_6$-Alkyl; und
p eine Zahl von 1 bis 2000 ist.

14. Verfahren zum Aufbringen einer Schutzbeschichtung auf ein elektrisches oder elektronisches Bauteil oder Gerät, umfassend die Schritte:

a) Bereitstellen einer Zusammensetzung gemäß einem der Ansprüche 1 bis 13;
b) Aufbringen der Zusammensetzung auf ein elektrisches oder elektronisches Bauteil oder Gerät; und
c) Härten der aufgebrachten Zusammensetzung, wodurch die Schutzbeschichtung ausgebildet wird.

**15.** Verwendung einer Zusammensetzung gemäß einem der Ansprüche 1 bis 13 zum Aufbringen einer Schutzbeschichtung auf ein elektrisches oder elektronisches Bauteil oder Gerät.

**16.** Schutzbeschichtung auf einem elektrischen oder elektronischen Bauteil oder Gerät, erhältlich durch das Verfahren gemäß Anspruch 14.

**17.** Elektrisches oder elektronisches Bauteil oder Gerät mit einer darauf aufgebrachten Schutzbeschichtung gemäß Anspruch 16.

**Claims**

**1.** Composition comprising

a) from 30 to 99.799989% by weight of at least one linear or branched polyorganosiloxane comprising at least two alkenyl or alkynyl groups, as component A;
b) from 0.1 to 30% by weight of at least one linear or branched polyorganosiloxane comprising at least 3 Si-H groups, as component B;
c) from 0.000001 to 1% by weight of at least one hydrosilylation catalyst as component C;
d) from 0.00001 to 5% by weight of at least one inhibitor or moderator selected from the groups D1 and D2, as component D:

D1: organic compounds having at least one alkynyl group and at least one hydroxy group;
D2: acyclic or cyclic organosiloxanes having from 1 to 5 Si atoms, comprising at least two alkenyl groups;

e) from 0.2 to 5% by weight of at least one iron-doped pyrogenic titanium dioxide as component E, where the iron content of the iron-doped pyrogenic titanium dioxide is from 0.1 to 10% by weight,
f) from 0 to 69.799989% by weight of one or more linear or branched polyorganosiloxanes comprising two terminal Si-H groups or one terminal Si-H group and one terminal alkenyl group, as component F;
g) from 0 to 69.799989% by weight of one or more other linear or branched polyorganosiloxanes as component G;
h) from 0 to 10% by weight of one or more additives as component H;

where the entirety of components A to H gives 100% by weight.

**2.** Composition according to Claim 1, **characterized in that** the composition comprises from 34 to 99.799989% by weight of component A, from 0 to 65.799989% by weight of component F, and from 0 to 65.799989% by weight of component G.

**3.** Composition according to Claim 1 or 2, **characterized in that** the composition comprises from 34 to 99.799989% by weight of component A, 0% by weight of component F, 0% by weight of component G, and 0% by weight of component H.

**4.** Composition according to Claim 2 or 3, **characterized in that** the composition consists of components A, B, C, D, and E, where the entirety of components A to E gives 100% by weight.

**5.** Composition according to any of Claims 1 to 4, **characterized in that** the composition comprises, as component A, at least one linear polyorganosiloxane of the general formula (IV),

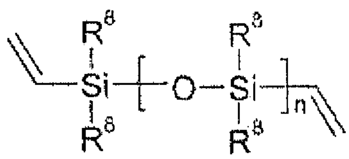

(IV)

where

$R^8$ is selected independently from $C_1$-$C_6$-alkyl; and
n is a number from 6 to 1000.

6. Composition according to any of Claims 1 to 5, **characterized in that** the composition comprises, as component B, at least one linear polydimethylsiloxane comprising at least 3 Si-H groups, where the Si-H content of the polydimethylsiloxane is from 4 to 8 mmol/g.

7. Composition according to any of Claims 1 to 6, **characterized in that** the hydrosilylation catalyst is selected from the group consisting of platinum-1,3-divinyl-1,1,3,3-tetramethyldisiloxane complex (Karstedt complex), platinum-1,3-diallyl-1,1,3,3-tetramethyldisiloxane complex, platinum-1,3-divinyl-1,3-dimethyl-1,3-diphenyldisiloxane complex, platinum-1,1,3,3-tetraphenyldisiloxane complex and platinum-1,3,5,7-tetramethyl-1,3,5,7-tetravinylcyclotetrasiloxane complex.

8. Composition according to any of Claims 1 to 7, **characterized in that** the group D1 consists of alkynols of the general formula (I),

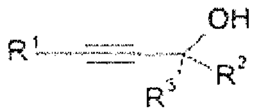

(I)

where
$R^1$, $R^2$, and $R^3$ are selected mutually independently from H, $C_1$-$C_6$-alkyl, and substituted or unsubstituted $C_3$-$C_6$-cycloalkyl; or
$R^1$ is selected from H, $C_1$-$C_6$-alkyl and substituted or unsubstituted $C_3$-$C_6$-cycloalkyl, and $R^2$, $R^3$ are bonded to one another and form a 3- to 8-membered ring which can have substitution by one or more $C_1$-$C_3$-alkyl groups.

9. Composition according to any of Claims 1 to 8, **characterized in that** the group D2 consists of the organosiloxanes tetramethyldivinylsiloxane, trimethyltrivinylcyclotrisiloxane and tetramethyltetravinylcyclotetrasiloxane.

10. Composition according to any of Claims 1 to 9, **characterized in that** the composition comprises, as component D, at least one inhibitor or moderator selected from the group D1, and at least one inhibitor or moderator selected from the group D2.

11. Composition according to any of Claims 1 to 10, **characterized in that** the iron oxide content of the iron-doped pyrogenic titanium dioxide is from 1 to 3% by weight.

12. Composition according to any of Claims 1, 2, or 5 to 11, **characterized in that** component F is one or more polyorganosiloxanes of the general formula (II),

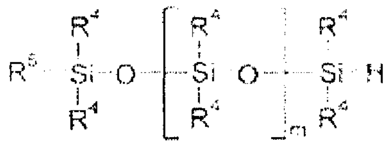

(II)

where

$R^4$ is selected independently from $C_3$-$C_6$-alkyl;
$R^5$ is selected from H and $C_2$-$C_6$-alkenyl; and
m is a number from 1 to 400.

13. Composition according to any of Claims 1, 2, or 5 to 12, **characterized in that** component G is one or more polyorganosiloxanes of the general formula (III),

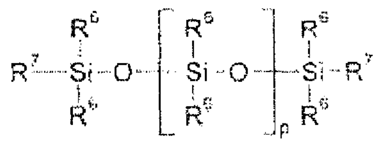

(III)

where

$R^6$ is selected independently from $C_1$-$C_6$-alkyl;
$R^7$ is selected independently from $C_1$-$C_6$-alkyl; and
p is a number from 1 to 2000.

**14.** Process for the application of a protective coating to an electrical or electronic component or device, comprising the following steps:

a) provision of a composition according to any of Claims 1 to 13;
b) application of the composition to an electrical or electronic component or device; and
c) curing of the composition applied, thus forming the protective coating.

**15.** Use of a composition according to any of Claims 1 to 13 for the application of a protective coating to an electrical or electronic component or device.

**16.** Protective coating on an electrical or electronic component or device, obtainable via the process according to Claim 14.

**17.** Electrical or electronic component or device with, applied thereto, a protective coating according to Claim 16.

**Revendications**

**1.** Composition contenant

a) 30 à 99,799989% en poids d'au moins un polyorganosiloxaxze linéaire ou ramifié, contenant au moins deux groupes alcényle ou alcynyle, comme composant A ;
b) 0,1 à 30% en poids d'au moins un polyorganosiloxane linéaire ou ramifié, contenant au moins 3 groupes Si-H, comme composant B ;
c) 0,000001 à 1% en poids d'au moins un catalyseur d'hydrosilylation comme composant C ;
d) 0, 00001 à 5% en poids d'au moins un inhibiteur ou modérateur, choisi dans les groupes D1 et D2, comme composant D :

D1 : composés organiques présentant au moins un groupe alcynyle et au moins un groupe hydroxyle ;
D2 : organosiloxanes acycliques ou cycliques comprenant 1 à 5 atomes de Si, contenant au moins deux groupes alcényle ;

e) 0,2 à 5% en poids d'au moins un dioxyde de titane préparé par voie pyrogène, dopé au fer, comme composant E, la proportion de fer du dioxyde de titane préparé par voie pyrogène, dopé au fer, étant de 0,1 à 10% en poids,
f) 0 à 69,799989% en poids d'un ou de plusieurs polyorganosiloxanes linéaires ou ramifiés, contenant deux groupes Si-H en position terminale ou un groupe Si-H en position terminale et un groupe alcényle en position terminale, comme composant F ;
g) 0 à 69,799989% en poids d'un ou de plusieurs autres polyorganosiloxanes linéaires ou ramifiés comme composant G ;
h) 0 à 10% en poids d'un ou de plusieurs additifs comme composant H ;

la somme des composants A à H étant de 100% en poids.

**2.** Composition selon la revendication 1, **caractérisée en ce que** la composition contient 34 à 99,799989% en poids

du composant A, 0 à 65,799989% en poids du composant F et 0 à 65,799989% en poids du composant G.

3. Composition selon la revendication 1 ou 2, **caractérisée en ce que** la composition contient 34 à 99,799989% en poids du composant A, 0% en poids du composant F, 0% en poids du composant G et 0% en poids du composant H.

4. Composition selon la revendication 2 ou 3, **caractérisée en ce que** la composition est constituée par les composants A, B, C, D et E, la somme des composants A à E étant de 100% en poids.

5. Composition selon l'une quelconque des revendications 1 à 4, **caractérisée en ce que** la composition contient, comme composant A, au moins un polyorganosiloxane linéaire de formule générale (IV),

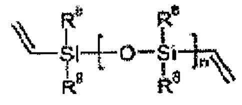

(IV)

dans laquelle

$R^8$ est choisi, indépendamment, parmi $C_1$-$C_6$-alkyle ; et
n représente un nombre de 6 à 1000.

6. Composition selon l'une quelconque des revendications 1 à 5, **caractérisée en ce que** la composition contient, comme composant B, au moins un polydiméthylsiloxane linéaire, contenant au moins 3 groupes Si-H, la proportion de Si-H du polydiméthylsiloxane étant située entre 4 et 8 mmoles/g.

7. Composition selon l'une quelconque des revendications 1 à 6, **caractérisée en ce que** le catalyseur d'hydrosilylation est choisi dans le groupe constitué par le complexe platine-1,3-divinyl-1,1,3,3-tétraméthyldisiloxane (complexe de Karstedt), le complexe platine-1,3-diallyl-1,1,3,3-tétraméthyldisiloxane, le complexe platine-1,3-divinyl-1,3-diméthyl-1,3-diphényldisiloxane, le complexe platine-1,1,3,3-tétraphényldisiloxane et le complexe platine-1,3,5,7-tétrarnêthyl-1,3,5,7-tétravinylcyclotétrasiloxane.

8. Composition selon l'une quelconque des revendications 1 à 7, **caractérisée en ce que** le groupe D1 est constitué par des alcynols de formule générale (I),

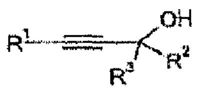

(I)

dans laquelle
$R^1$, $R^2$, $R^3$ sont choisis, indépendamment, parmi H ; $C_1$-$C_6$-alkyle ; et $C_3$-$C_6$-cycloalkyle substitué ou non substitué ; ou
$R^1$ est choisi parmi H ; $C_1$-$C_6$-alkyle; et $C_3$-$C_6$-cycloalkyle substitué ou non substitué ; et $R^2$, $R^3$ sont liés l'un à l'autre et forment un cycle de 3 à 8 chaînons, qui est peut être substitué par un ou plusieurs groupes $C_1$-$C_3$-alkyle.

9. Composition selon l'une quelconque des revendications 1 à 8, **caractérisée en ce que** le groupe D2 est constitué par les organosiloxanes tétraméthyldivinylsiloxane, triméthyltrivinylcyclotrisiloxane et tétraméthyltétravinylcyclotétrasiloxane.

10. Composition selon l'une quelconque des revendications 1 à 9, **caractérisée en ce que** la composition contient, comme composant D, au moins un inhibiteur ou modérateur choisi dans le groupe D1 et au moins un inhibiteur ou modérateur choisi dans le groupe D2.

11. Composition selon l'une quelconque des revendications 1 à 10, **caractérisée en ce que** la proportion d'oxyde de fer du dioxyde de titane préparé par voie pyrogène, dopé au fer, est de 1 à 3% en poids.

**12.** Composition selon l'une quelconque des revendications 1, 2 ou 5 à 11, **caractérisée en ce qu'**il s'agit, pour le composant F, d'un ou de plusieurs polyorganosiloxanes de formule générale (II),

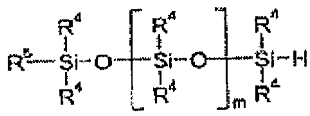

(II)

dans laquelle

$R^4$ est choisi, indépendamment, parmi $C_1$-$C_6$-alkyle ;
$R^5$ est choisi parmi H et $C_2$-$C_6$-alcényle ; et
m représente un nombre de 1 à 400.

**13.** Composition selon l'une quelconque des revendications 1, 2 ou 5 à 12, **caractérisée en ce qu'**il s'agit, pour le composant G, d'un ou de plusieurs polyorganosiloxanes de formule générale (III),

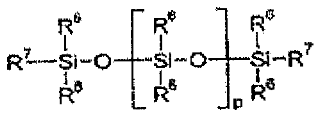

(III)

dans laquelle

$R^6$ est choisi, indépendamment, parmi $C_1$-$C_6$-alkyle ;
$R^7$ est choisi, indépendamment, parmi $C_1$-$C_6$-alkyle ; et
p représente un nombre de 1 à 2000.

**14.** Procédé pour appliquer un revêtement de protection sur une pièce ou un appareil électrique ou électronique, comprenant les étapes de :

a) mise à disposition d'une composition selon l'une quelconque des revendications 1 à 13 ;
b) application de la composition sur une pièce ou un appareil électrique ou électronique ; et
c) durcissement de la composition appliquée, le revêtement de protection étant ainsi formé.

**15.** Utilisation d'une composition selon l'une quelconque des revendications 1 à 13 pour l'application d'un revêtement de protection sur une pièce ou un appareil électrique ou électronique.

**16.** Revêtement de protection sur une pièce ou un appareil électrique ou électronique, pouvant être obtenu par le procédé selon la revendication 14.

**17.** Pièce ou appareil électrique ou électronique sur laquelle/lequel est appliqué un revêtement de protection selon la revendication 16.

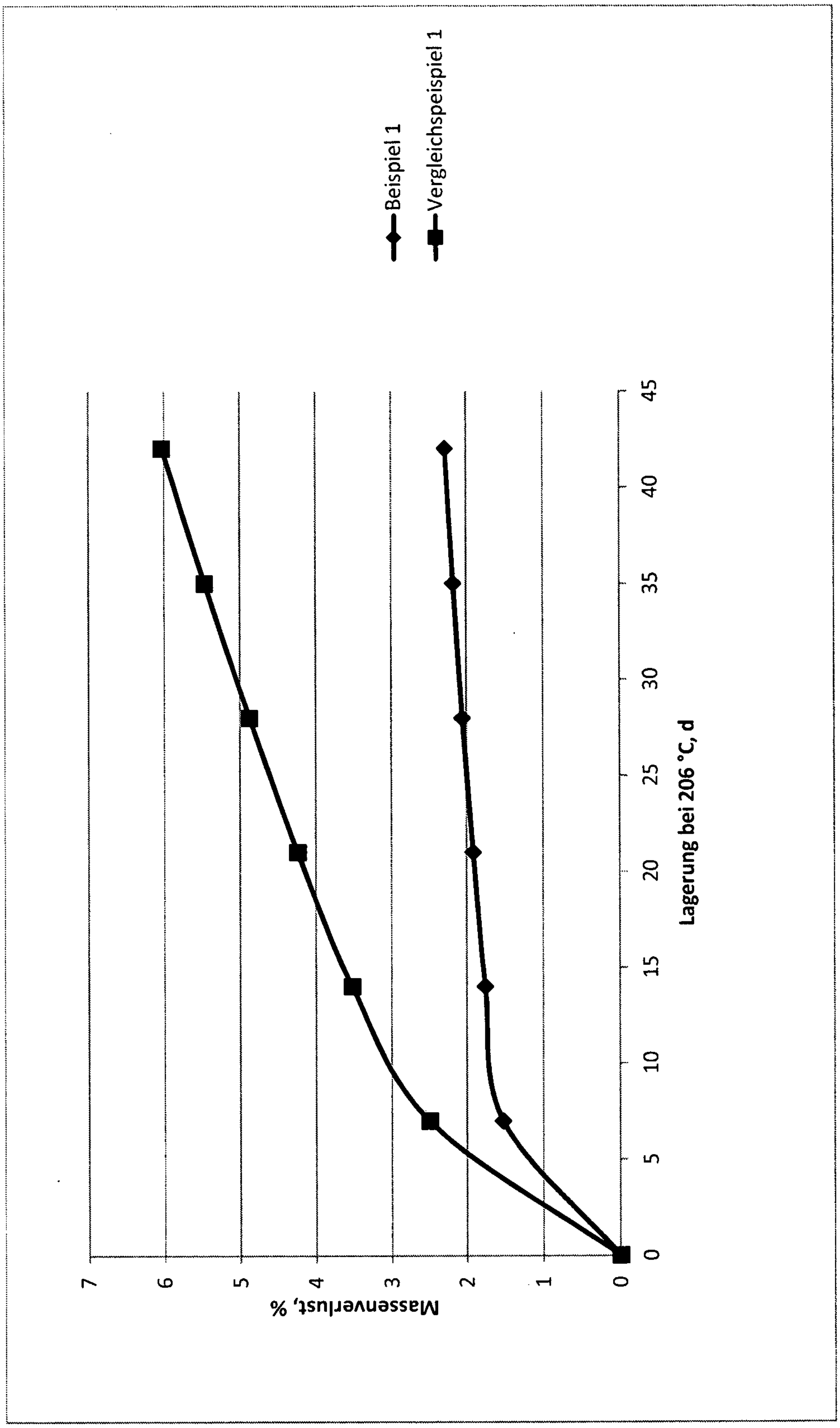
Beispiel 1
Vergleichspeispiel 1
Massenverlust, %
0
1
2
3
4
5
6
7
Lagerung bei 206 °C, d
0
5
10
15
20
25
30
35
40
45

Fig.1

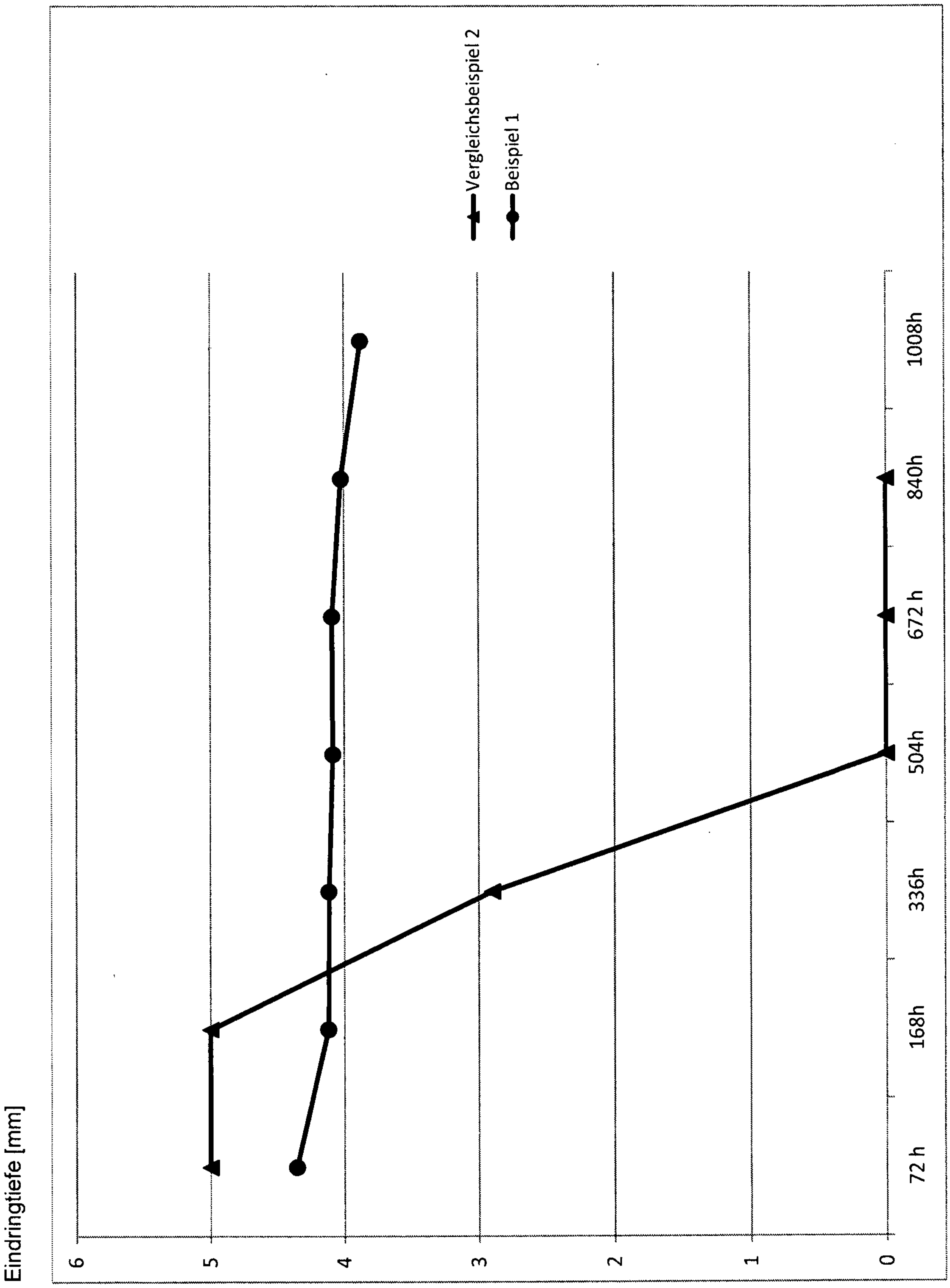
Eindringtiefe [mm]
6
5
4
3
2
1
0
72 h
168h
336h
504h
672 h
840h
1008h
Vergleichsbeispiel 2
Beispiel 1

Fig.2

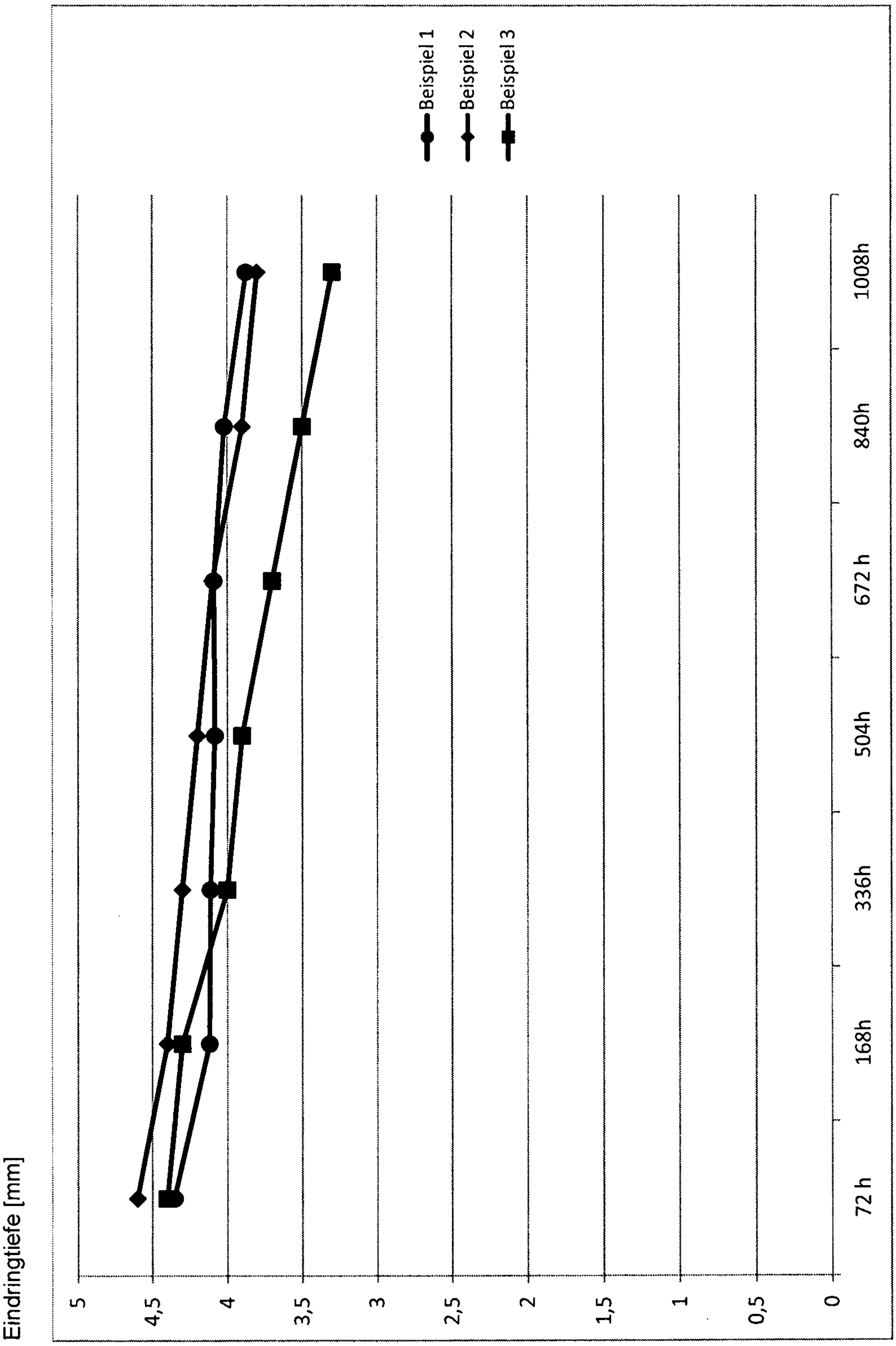
Eindringtiefe [mm]
5
4,5
4
3,5
3
2,5
2
1,5
1
0,5
0
72 h
168h
336h
504h
672 h
840h
1008h
Beispiel 1
Beispiel 2
Beispiel 3

Fig.3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 5571853 A
- US 7829648 B
- JP 2003055553 A